# FASCICULE DE BREVET EUROPEEN

(11) **EP 2 338 791 B1**
(45) Date de publication et mention de la délivrance du brevet: **13.02.2013**
(21) Numéro de dépôt: 10290649.2
(22) Date de dépôt: 13.12.2010
(51) Int. Cl.: B64D 1/10, B64D 1/12

(54) **Système d'emport et de largage de charge pour avion de transport**
Halte- und Abwurfsystem für Lasten für Transportflugzeug
Load carriage and launch system for transport aircraft

(30) Priorité: 16.12.2009 FR 0906104
(43) Date de publication de la demande: 29.06.2011
(73) Titulaire: MBDA France, 75016 Paris (FR)
(72) Inventeur: Jaurand, Benoît, 91270 Vanves (FR); Michaud, Frédéric, 75015 Paris (FR)
(74) Mandataire: Hauer, Bernard

(56) Documents cités:
- DE-A1- 10 313 279
- DE-A1- 10 342 565
- GB-A- 1 074 825
- US-A- 4 256 012
- US-A- 5 763 811

## Description

La présente invention concerne un système d'emport et de largage de charge pour un avion de transport.

Dans le cadre de la présente invention, on entend par charge tout objet susceptible d'être emporté et largué à partir de l'avion. Il peut s'agir notamment de drones, de fret,... De préférence, une charge correspond à une munition qui, dans le cadre de l'invention, représente un projectile de type missile ou bombe. De préférence, ce projectile fait partie d'un système d'arme usuel à charge militaire et est doté d'un système de propulsion et de moyens de guidage susceptibles de le faire voler et de le guider vers une cible à endommager ou à détruire. Il peut notamment s'agir d'une bombe guidée ou d'un missile de croisière.

La présente invention concerne plus précisément un système d'emport et de largage destiné à un avion de transport militaire, dans lequel l'emport du missile est réalisé dans la soute de l'avion et le largage est mis en oeuvre par une ouverture prévue à l'arrière de l'avion.

On connaît de nombreux systèmes de largage qui utilisent, généralement, un parachute pour larguer une munition ainsi embarquée. Dans ce cas, le parachute qui est attaché à la munition est, en général, gonflé à l'arrière de l'avion de manière à entraîner la munition vers l'arrière hors de l'avion.

En particulier, par le document DE-10343565, on connaît un système d'emport et de largage de missiles, qui est prévu sur un avion de transport. Ce système comporte un conteneur qui est agencé dans la soute de l'avion et qui est susceptible de recevoir une pluralité de missiles. Ces missiles sont montés dans le conteneur de manière à pouvoir coulisser par rapport audit conteneur qui est fixé à l'intérieur de l'avion. De plus, un parachute est attaché à l'arrière de chacun desdits missiles. Dans ce cas, pour réaliser le largage d'un missile, on met en oeuvre les opérations suivantes :
- on ouvre les portes de la soute arrière de l'avion ;
- on déploie à l'extérieur de l'avion le parachute qui est attaché au missile à larguer;
- en se gonflant, ce parachute retient le missile qui est éjecté par l'arrière en coulissant dans ledit conteneur ; et
- lorsque le missile est complètement éjecté de l'avion, on le libère du parachute, et il peut alors être propulsé et guidé de façon usuelle.

Les solutions de largage par parachute présentent de nombreux inconvénients, et notamment :
- un fort ralentissement de la munition après le largage. En effet, les avions de transport militaires sont limités en vitesse (généralement autour de Vc=200/250 noeuds) lors d'un vol avec la soute ouverte. L'utilisation d'un parachute pour l'extraction de la munition implique une vitesse après largage quasi-nulle. Or, les munitions actuelles sont dimensionnées pour être tirées à partir d'avions de chasse, à des vitesses élevées (proches de M=0,8-0,9 (Vc > 400 noeuds)), sans ralentissement après largage. La faible vitesse de la munition après largage pose des problèmes de pilotabilité, de démarrage du moteur pour des missiles de croisière, ainsi qu'une forte diminution de portée pour des bombes guidées et des petits missiles. Aussi, l'utilisation de munitions initialement dimensionnées pour le largage à partir d'avions de chasse rend nécessaire l'intégration d'un système de ré-accélération ;
- un risque de collision en sortie de soute. En effet, la porte de soute inférieure de l'avion est horizontale lors d'un largage en vol. La munition doit donc parcourir une distance équivalente à la longueur de la porte (5 à 6 mètres), avant de sortir de la zone de l'avion. Ce dernier inconvénient réduit les domaines d'utilisation (limitation des conditions météorologiques acceptables) ;
- l'intégration sur la munition d'un point d'accroche permettant à la fois de sortir la munition de manière équilibrée et de supporter les efforts d'accélération. On doit prévoir, de plus, un système de sécurité permettant le largage du parachute si la munition reste coincée ; et
- un manque de discrétion lors du largage du parachute, une fois que la munition est éjectée. En effet, le parachute n'est pas récupéré après le largage, ce qui peut permettre à des troupes ennemies d'identifier l'origine d'un tir.

Par conséquent, l'utilisation d'un parachute lors d'un largage est compliquée à mettre en oeuvre, et nécessite des modifications lourdes pour l'adapter à des munitions (missiles et bombes) usuelles.

Par ailleurs, par le document GB 1 074 825, on connaît un système d'emport et de largage de missiles pour un avion de transport. Ce système comporte des structures d'emport pour le transport des missiles et une plateforme de largage qui est utilisée pour larguer les missiles. Cette plateforme de largage peut être amenée à proximité d'une structure d'emport pour un transfert de missile de la structure vers la plateforme, en vue d'un largage. La plateforme est ensuite déplacée vers l'arrière de l'avion et est repliée dans une position de largage, dans laquelle le missile est largué à travers une ouverture à l'arrière de la soute de l'avion.

La présente invention a pour objet de remédier aux inconvénients précités. Elle concerne un système d'emport et de largage de charge pour un avion de transport, qui permet de réaliser, sans utiliser de parachute, un largage en toute sécurité et à coût réduit, et qui est facilement adaptable à tout type d'avion de transport.

A cet effet, selon l'invention, ledit système d'emport et de largage du type comportant au moins un conteneur qui est agencé dans la soute de l'avion et qui est susceptible de recevoir au moins une charge qui est montée à l'intérieur dudit conteneur à l'aide de moyens de coulissement, est remarquable en ce que ledit conteneur est agencé dans ladite soute de manière à pouvoir être déplacé longitudinalement et être amené de l'une à l'autre des positions suivantes :
- une position d'emport, dans laquelle il est entièrement situé à l'intérieur de la soute ; et
- une position de largage, dans laquelle il est décalé longitudinalement vers l'arrière de l'aéronef par rapport à ladite position d'emport, de sorte qu'une partie dudit conteneur, dite partie de largage, est alors située à l'extérieur de l'avion de transport au travers d'une ouverture à l'arrière de la soute,
et en ce que lesdits moyens de coulissement sont formés de manière à pouvoir amener ladite charge dans ladite partie de largage, d'où elle peut être larguée lorsque ledit conteneur est dans ladite position de largage.

Ainsi, grâce à l'invention, une partie du conteneur (partie de largage), où peut être amenée une charge, peut être déplacée à l'extérieur de l'avion de transport. Cette charge peut alors être larguée sans utiliser de moyen d'extraction, et en particulier sans utiliser de parachute, ce qui permet notamment de remédier aux inconvénients importants précités, relatifs à un largage par parachute.

En particulier, grâce à l'invention, on obtient notamment les avantages suivants :
- une absence de ralentissement de la charge après le largage, ce qui permet, dans le cas d'un missile, de rester dans le domaine de pilotabilité du missile et de démarrage du moteur. Dans cette situation, l'intégration d'un système de ré-accélération du missile n'est plus indispensable ;
- aucun équipement n'est largué, contrairement au largage par parachute, ce qui permet d'obtenir une certaine discrétion opérationnelle ; et
- comme la partie de largage du conteneur est située à l'extérieur de l'avion de transport, les risques de collision avec ce dernier sont fortement diminués, et on obtient un domaine de largage beaucoup plus étendu.

Dans la position de largage, la charge est larguée de préférence par simple lâcher. Toutefois, dans le cadre de la présente invention, le largage peut également être réalisé (dans cette position de largage) par éjection ou par éjection et lâcher.

De façon avantageuse, lesdits moyens de coulissement comportent des rails fixés sur le conteneur et pourvus d'un dispositif d'éjection qui est susceptible de coulisser sur lesdits rails et qui est apte à supporter la charge lors de l'emport et à la libérer (par lâcher et/ou éjection) lors du largage. Ainsi, on peut utiliser un dispositif d'éjection qui est similaire à un dispositif d'éjection usuel, employé lors de l'emport et du largage d'une munition sur un avion de chasse. Ceci permet d'utiliser les points d'emport existants habituellement sur les munitions et limite donc les modifications à apporter à ces dernières.

En outre, de façon avantageuse, ledit conteneur comprend une cage munie de compartiments susceptibles de recevoir une pluralité de charges, identiques ou différentes, ce qui permet de disposer d'une souplesse opérationnelle. Ces compartiments peuvent être agencés en rangées et/ou en colonnes. De plus, chaque compartiment peut contenir longitudinalement plusieurs missiles, si les tailles respectives le permettent.

Comme ledit conteneur comporte une (unique) cage munie de tous les moyens nécessaires à l'emport et au largage, il suffit d'installer ce conteneur dans l'avion pour pouvoir mettre en oeuvre l'invention. Par conséquent, la présente invention ne nécessite pas une modification importante de l'avion de transport utilisé, et elle peut être prévue sur tout type d'avion de transport.

En outre, si on prévoit des moyens de liaison du conteneur sur le fuselage de l'avion de transport, qui sont facilement démontables, on peut rendre à l'avion, rapidement et à coût réduit, sa configuration initiale de sorte qu'il puisse remplir d'autres types de missions, tels que le transport de troupes et/ou de véhicules.

En outre, avantageusement :
- les rails sont fixés sur les côtés internes du conteneur, afin de ne pas gêner le largage des charges d'un étage supérieur lorsque le conteneur comporte plusieurs étages superposés ;
- le système conforme à l'invention comporte, pour chaque charge, des moyens de coulissement dédiés. Ainsi, en prévoyant des moyens de coulissement adaptés au type de charge utilisé, on peut emporter et larguer différents types de charge à l'aide d'un seul et même conteneur, ce qui permet notamment d'augmenter les capacités opérationnelles.

Par ailleurs, de façon avantageuse, ledit système comporte, de plus, un dispositif de commande du largage qui est apte à commander les moyens pour déplacer ledit conteneur, ainsi que lesdits moyens de coulissement, et qui est installé dans une zone dédiée de l'avion de transport, qui peut être pressurisée.

La présente invention concerne également un avion de transport (militaire) qui comporte un système d'emport et de largage tel que celui précité.
Les figures du dessin annexé feront bien comprendre comment l'invention peut être réalisée. Sur ces figures, des références identiques désignent des éléments semblables.
Les figures 1 et 2 montrent schématiquement un système conforme à l'invention qui est monté sur un avion de transport, respectivement dans une position d'emport et dans une position de largage.
La figure 3 illustre schématiquement le largage d'une munition.
Les figures 4A, 4B, 4C et 4D illustrent schématiquement des moments successifs correspondant aux largages successifs de munitions à partir d'un même conteneur embarqué.

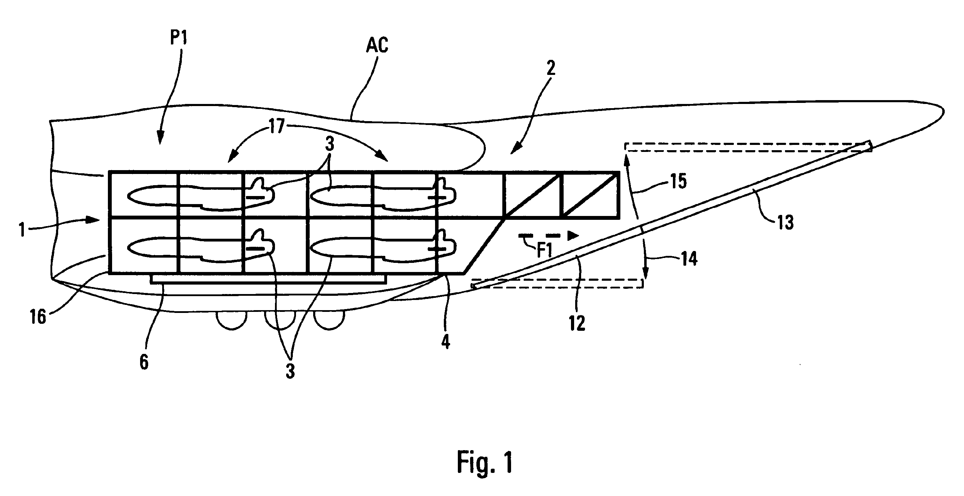

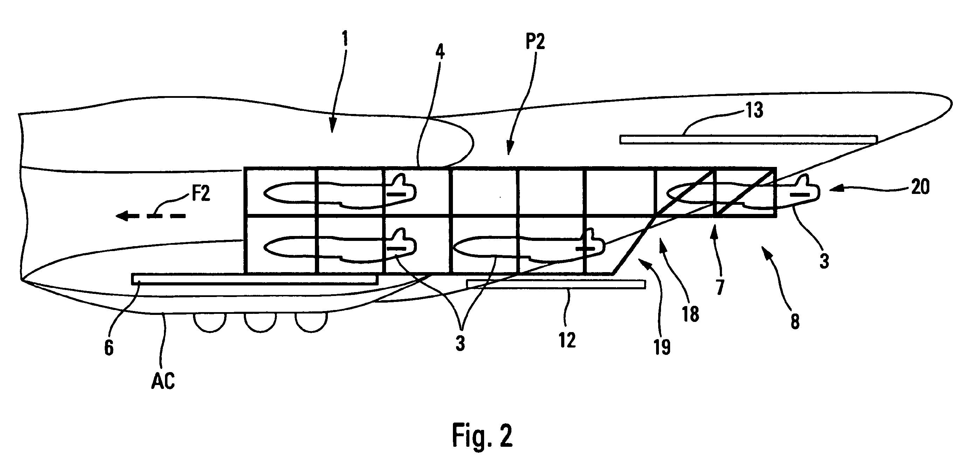

Le système 1 conforme à l'invention et représenté schématiquement sur les figures 1 et 2 est destiné à être installé dans un avion de transport AC, notamment dans un avion de transport militaire lourd, et au moins en partie dans la soute 2 dudit avion de transport AC, et il est destiné à emporter et à larguer des charges qui représentent, à titre d'exemple préféré, des munitions 3 dans la description suivante.

Une munition 3 correspond à un projectile qui fait partie d'un système d'arme usuel à charge militaire et qui est doté de moyens de propulsion usuels et de moyens de guidage usuels susceptibles de le faire voler et de le guider vers une cible à endommager ou à détruire. Il peut notamment s'agir d'une bombe guidée ou d'un missile de croisière.

Ledit système 1 comporte un conteneur 4 qui est agencé dans la soute 2 de l'avion de transport AC et qui est susceptible de recevoir au moins une munition 3. Dans l'exemple des figures 1 et 2, ledit conteneur 4 comporte huit munitions 3, à savoir deux groupes de quatre munitions 3, montés côte à côte, dont un seul groupe est visible sur ces figures 1 et 2. Chaque munition 3 est montée à l'intérieur du conteneur 4 de manière à pouvoir coulisser à l'aide de moyens de coulissement 5 précisés ci-dessous.

Selon l'invention, ledit conteneur 4 est agencé dans la soute 2 de l'avion de transport AC de manière à pouvoir être déplacé longitudinalement, à l'aide de moyens de déplacement 6 comprenant, par exemple, des rails fixés sur le fuselage de l'avion, qui coopèrent avec des moyens solidaires du conteneur 4.

Selon l'invention, ledit conteneur 4 peut être amené, à l'aide desdits moyens de déplacement 6, d'une position avant P1 représentée sur la figure 1 vers une position arrière P2 représentée sur la figure 2, dans le sens illustré par une flèche F1, et de cette position P2 de nouveau dans la position P1 dans le sens illustré par une flèche F2. Ces positions P1 et P2 correspondent, respectivement, à :
- une position P1 d'emport, dans laquelle le conteneur 4 est entièrement situé à l'intérieur de la soute 2 ; et
- une position P2 de largage, dans laquelle ledit conteneur 4 est décalé longitudinalement vers l'arrière de l'aéronef AC par rapport à ladite position P1 d'emport, de sorte qu'une partie 7 dudit conteneur 4, dite partie de largage, est alors située à l'extérieur de l'avion de transport AC au travers d'une ouverture 8 à l'arrière de la soute 2.

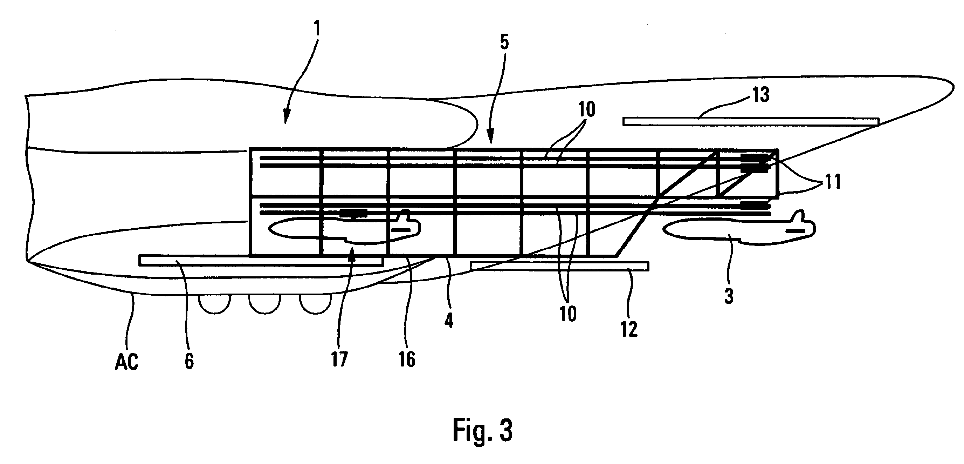

De plus, selon l'invention, lesdits moyens de coulissement 5 sont formés de manière à pouvoir amener les munitions 3 qui sont situées dans le conteneur 4 dans ladite partie de largage 7. Dans un mode de réalisation préféré, lesdits moyens de coulissement 5 comportent des rails 10 fixés sur le conteneur 4 et pourvus d'un dispositif d'éjection 11 qui est susceptible de coulisser sur lesdits rails 10 et qui est apte à supporter la munition 3 lors de l'emport et à la libérer lors du largage, comme représenté schématiquement sur la figure 3.

Par ailleurs, ledit système 1 comporte, de plus, un dispositif (non représenté) de commande du largage qui est apte à commander, notamment, lesdits moyens de déplacement 6 et lesdits moyens de coulissement 5, suite à des commandes engendrées par un opérateur, et qui est installé dans une zone dédiée de l'avion de transport AC, qui peut être pressurisée.

Par conséquent, pour réaliser le largage de munitions 3 emportées par le système 1 conforme à l'invention, on met en oeuvre les opérations suivantes :
- à partir de la position P1 d'emport, c'est-à-dire la position qui est utilisée lors des phases de vol (décollage, phase de croisière,...) autres que la phase de largage, pour laquelle le conteneur 4 est situé complètement à l'intérieur de la soute 2 de l'aéronef AC et les portes 12 et 13 à l'arrière sont fermées, on commande, de façon usuelle, une ouverture desdites portes 12 et 13 (en les faisant pivoter comme illustré par des flèches 14 et 15 sur la figure 1 pour les amener dans les positions représentées en traits interrompus sur cette figure 1 et former l'ouverture 8), et on commande, à l'aide du dispositif de commande du largage, les moyens de déplacement 6 pour engendrer un déplacement de l'ensemble du conteneur 4 longitudinalement vers l'arrière de l'avion AC dans le sens illustré par la flèche F1 ;
- lorsque le conteneur 4 se trouve dans la position P2, pour laquelle la partie de largage 7 est située hors de l'avion AC, on amène une munition 3 dans cette partie de largage 7, à l'aide desdits moyens de coulissement 5 (et du dispositif de commande du largage), et dans cette position, on commande le dispositif d'éjection 11 pour qu'il libère (par lâcher et/ou éjection) la munition 3;
- on peut réaliser l'étape précédente pour une seule munition 3, ou bien la répéter pour certaines ou l'ensemble des munitions 3 contenues dans le conteneur 4 ; et
- lorsque les munitions 3 que l'on désirait larguer l'ont été, le conteneur 4 peut être ramené dans sa position P1 dans le sens illustré par la flèche F2 et les portes 12 et 13 peuvent être refermées.

Ainsi, grâce au système 1 conforme à l'invention, une partie du conteneur 4 (partie de largage 7), dans laquelle peut-être amenée une munition 3, peut être déplacée à l'extérieur de l'avion de transport AC. Cette munition 3 peut alors être larguée, sans avoir à utiliser de moyen d'extraction tel qu'un parachute par exemple.

Par conséquent, grâce au système 1 conforme à l'invention, on obtient notamment les avantages suivants :
- une absence de ralentissement de la munition 3 après le largage, ce qui permet, dans le cas d'un missile, de rester dans le domaine de pilotabilité du missile et de démarrage de son moteur. Dans cette situation, l'intégration d'un système de ré-accélération du missile n'est pas indispensable ;
- aucun équipement n'est largué, contrairement à un largage par parachute, ce qui permet d'obtenir une certaine discrétion opérationnelle ; et
- comme lors du largage, la partie de largage 7 du conteneur 4 est située à l'extérieur de l'avion de transport AC, les risques de collision des munitions 3 avec ce dernier sont fortement diminués, et on obtient un domaine de largage plus étendu que les solutions usuelles.

Dans un mode de réalisation préféré, ledit conteneur 4 comprend une cage 16 qui est munie de compartiments 17 qui sont susceptibles de recevoir chacun une ou plusieurs munitions 3. Ces compartiments 17 peuvent être agencés en rangée et/ou en colonnes. Dans l'exemple des figures 1 à 3, le conteneur 4 comprend deux ensembles de compartiments agencés en rangée l'un au-dessus de l'autre.

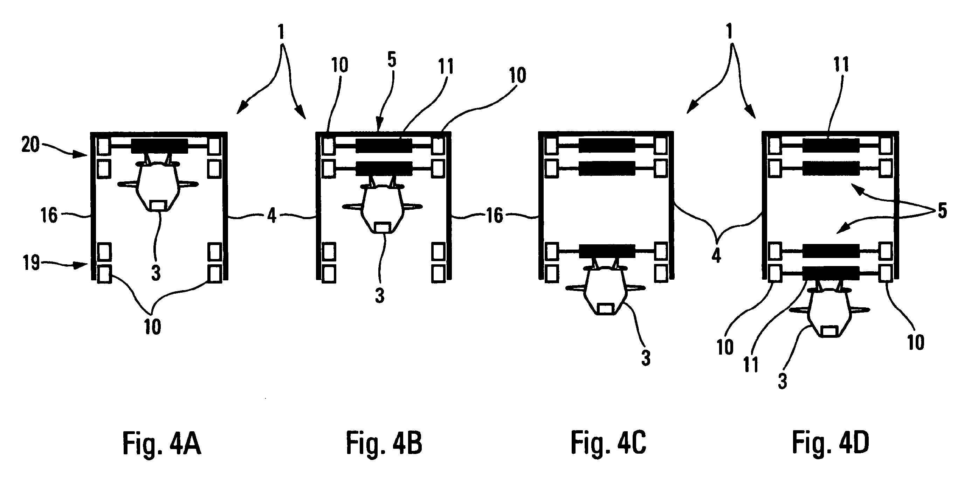

Dans ce cas, l'extrémité arrière 18 du conteneur 4, qui comprend la partie de largage 7, doit être formée pour que l'étage inférieur 19 ne gêne pas le largage d'une munition 3 de l'étage supérieur 20, comme représenté sur la figure 2. Pour ce faire, les rails 10 sont fixés sur les côtés des compartiments du conteneur 4, tel qu'illustré sur les figures 4A à 4D.

Ledit dispositif d'éjection 11 reste sur les rails 10 après le largage. Aussi, le système 1 comporte un jeu de rails 10 par munition 3. De plus, dans le cadre de la présente invention, on peut utiliser un dispositif d'éjection 11 qui est similaire à un dispositif d'éjection usuel, employé sur un avion de chasse. Ceci permet, notamment, d'utiliser les points d'emport existants habituellement sur les munitions et limite donc les modifications à apporter à ces dernières.

Les figures 4A à 4D illustrent schématiquement, selon une vue de l'arrière de l'avion AC, les largages successifs des quatre munitions 3 qui sont installées dans un conteneur 4 similaire à une partie de celui représenté sur les figures 1 et 2. La figure 4C correspond à la situation de la figure 3, pour laquelle les deux munitions 3 installées à l'étage supérieur 20 ont déjà été larguées et on procède au largage de la première des deux munitions 3 situées à l'étage inférieur 19.

## Revendications

1. Système d'emport et de largage de charge pour un avion de transport (AC), ledit système (1) comportant un conteneur (4) qui est agencé dans la soute (2) de l'avion (AC) et qui est susceptible de recevoir au moins une charge (3) qui est montée à l'intérieur dudit conteneur (4) à l'aide de moyens de coulissement (5),
ledit conteneur (4) étant agencé dans ladite soute (2) de manière à pouvoir être déplacé longitudinalement, à l'aide de moyens de déplacement (6), et être amené de l'une à l'autre des positions suivantes :
- une position d'emport (P1), dans laquelle il est entièrement situé à l'intérieur de la soute et supporte ladite charge (3) ; et
- une position de largage (P2), dans laquelle il est décalé longitudinalement vers l'arrière de l'aéronef (AC) par rapport à ladite position d'emport (P1), de sorte qu'une partie dudit conteneur (4), dite partie de largage (7), est alors située à l'extérieur de l'avion de transport (AC) au travers d'une ouverture (8) à l'arrière de la soute (2),
lesdits moyens de coulissement (5) étant formés de manière à pouvoir amener ladite charge (3) qui est située dans ledit conteneur (4) dans ladite partie de largage (7), d'où elle peut être larguée lorsque ledit conteneur (4) est dans ladite position de largage (P2), lesdits moyens de coulissement (5) comportant des rails (10) fixés sur le conteneur (4) et pourvus d'un dispositif d'éjection (11) qui est susceptible de coulisser sur lesdits rails (10), **caractérisé en ce que** le dispositif d'éjection est apte à supporter la charge (3) lors de l'emport et à la libérer lors du largage.

2. Système selon la revendication 1,
**caractérisé en ce que** ledit conteneur (4) comprend une cage (16) munie de compartiments (17) susceptibles de recevoir une pluralité de charges (3).

3. Système selon l'une des revendications 1 et 2,
**caractérisé en ce que** les rails (10) sont fixés sur les côtés internes du conteneur (4).

4. Système selon l'une quelconque des revendications précédentes,
**caractérisé en ce qu'**il comporte, pour chaque charge (3), des moyens de coulissement (5) dédiés.

5. Système selon l'une quelconque des revendications précédentes,
**caractérisé en ce qu'**il comporte, de plus, un dispositif de commande du largage qui est apte à commander lesdits moyens de coulissement (5), ainsi que les moyens (6) pour déplacer ledit conteneur (4), et **en ce que** ledit dispositif de commande est installé dans une zone pressurisée de l'avion de transport (AC).

6. Avion de transport,
**caractérisé en ce qu'**il comporte un système (1) d'emport et de largage de charge, tel que celui spécifié sous l'une quelconque des revendications 1 à 5.

## Claims

1. A load carrying and dropping system for a transport plane (AC), said system (1) comprising one container (4) being arranged in the cargo compartment (2) of the plane (AC) and being able to receive at least one load (3) being mounted within said container (4) thru sliding means,
said container (4) being arranged within said cargo compartment (2) so as to be able to be moved longitudinally with the help of moving means (6) and to be brought from one to the other of the following positions:
- one carrying position (P1), wherein it is completely located inside the cargo compartment and supports said load (3); and
- one dropping position (P2), wherein it is offset longitudinally toward the back of the aircraft (AC) with respect to said carrying position (P1) so that a part of said container (4), so-called dropping part (7), is then located outside the transport plane (AC) through an opening (8) at the back of the cargo compartment (2), and
said sliding means (5) being formed so as to be able to bring said load (3) which is located in said container (4) in said dropping part (7), where it can be dropped when said container (4) is in said dropping position (P2), said sliding means (5) comprising rails (10) fastened on the container (4) and provided with an ejection device (11) being able to slide on said rails (10),
**characterized in that** said ejection device (11) is able to support the load (3) upon carrying and to release it upon dropping.

2. The system according to claim 1;
**characterized in that** said container (4) comprises a cage (16) provided with compartments (17) able to receive a plurality of loads (3).

3. The system according to any of claims 1 and 2,
**characterized in that** the rails (10) are fastened on the internal sides of the container (4).

4. System according to any of preceding claims,
**characterized in that** it comprises, for each load (3), dedicated sliding means (5).

5. The system according to any of preceding claims,
**characterized in that** it also comprises a dropping control device being able to control said sliding means (5), as well as the means (6) for moving said container (4), and **in that** said control device is arranged in a pressurized area of the transport plane (AC).

6. A transport plane,
**characterized in that** it comprises a load carrying and dropping system (1), such as the one specified in any of claims 1 to 5.

## Patentansprüche

1. System zum Transport und Abwurf von Lasten für ein Transportflugzeug (AC), wobei das System (1) einen Container (4) umfasst, der im Frachtraum (2) des Flugzeugs (AC) aufgestellt ist und der mindestens eine Last (3) aufnehmen kann, die mit Hilfe von Gleitvorrichtungen (5) im Container (4) befestigt ist,
wobei der Container (4) in dem Frachtraum (2) so aufgestellt ist, dass er mit Hilfe von Verschiebemitteln (6) in Längsrichtung verschoben und von der einen auf die andere der folgenden Positionen gebracht werden kann:
- eine Transportposition (P1), in der er sich vollständig im Inneren des Frachtraums befindet und die Last (3) trägt; und
- eine Abwurfposition (P2), in der er im Verhältnis zur Transportposition (P1) in Längsrichtung in Richtung des hinteren Teils des Flugzeugs (AC) verschoben ist, sodass sich ein Teil des Containers (4), der so genannte Abwurf teil (7), dann über eine Öffnung (8) im hinteren Teil des Frachtraums (2) außerhalb des Transportflugzeugs (AC) befindet,
wobei die Gleitvorrichtungen (5) so ausgebildet sind, dass sie die Last (3), die sich in dem Container (4) befindet, in den Abwurfteil (7) bringen können, von dem aus sie abgeworfen werden kann, wenn sich der Container (4) in der Abwurfposition (P2) befindet, wobei die Gleitvorrichtungen (5) Schienen (10) umfassen, die am Container (4) befestigt und mit einer Auswurfvorrichtung (11) ausgerüstet sind, die auf den Schienen (10) gleiten kann, **dadurch gekennzeichnet, dass** die Auswurfvorrichtung in der Lage ist, die Last (3) beim Transport zu tragen und sie beim Abwurf freizugeben.

2. System nach Anspruch 1,
**dadurch gekennzeichnet, dass** der Container (4) ein Gestell (16) mit Fächern (17) umfasst, die eine Vielzahl von Lasten (3) aufnehmen können.

3. System nach einem der Ansprüche 1 und 2,
**dadurch gekennzeichnet, dass** die Schienen (10) an den Innenseiten des Containers (4) befestigt sind.

4. System nach einem der vorhergehenden Ansprüche,
**dadurch gekennzeichnet, dass** es für jede Last (3) bestimmte Gleitvorrichtungen (5) umfasst.

5. System nach einem der vorhergehenden Ansprüche,
**dadurch gekennzeichnet, dass** es darüber hinaus eine Vorrichtung zur Steuerung des Abwurfs umfasst, die die Gleitvorrichtungen (5) sowie die Mittel (6) zum Verschieben des Containers (4) steuern kann, und dass die Steuerungsvorrichtung in einer Druckzone des Transportflugzeugs (AC) installiert ist.

6. Transportflugzeug,
**dadurch gekennzeichnet, dass** es ein wie in einem der Ansprüche 1 bis 5 spezifiziertes System (1) zum Transport und Abwurf von Lasten umfasst.
